# EUROPÄISCHE PATENTSCHRIFT

(11) **EP 0 861 170 B1**
(45) Veröffentlichungstag und Bekanntmachung des Hinweises auf die Patenterteilung: **27.10.1999**
(21) Anmeldenummer: 96929329.9
(22) Anmeldetag: 27.08.1996
(51) Int. Cl.: B60R 22/24

(54) **GURTBESCHLAG FÜR EINEN SICHERHEITSGURT**
BELT FITTING FOR A SAFETY BELT
FERRURE POUR CEINTURE DE SECURITE

(30) Priorität: 25.11.1995 DE 19543996
(43) Veröffentlichungstag der Anmeldung: 02.09.1998
(73) Patentinhaber: Bayerische Motoren Werke Aktiengesellschaft, 80788 München (DE)
(72) Erfinder: HENNIG, Herbert, D-81827 München (DE); SCHMIEDEL, Ingo, D-85250 Altomünster (DE)
(86) Internationale Anmeldenummer: EP9603765
(87) Internationale Veröffentlichungsnummer: WO9719836

(56) Entgegenhaltungen:
- DE-A- 2 726 683
- DE-A- 3 200 118
- US-A- 4 222 609

## Beschreibung

Die Erfindung bezieht sich auf einen Umlenkbeschlag für einen Sicherheitsgurt in einem Fahrzeug, insbesondere Kraftfahrzeug, wie er im Oberbegriff des Anspruchs 1 beschrieben ist.

Die heutzutage in Fahrzeugen verwendeten Sicherheitsgurte bestehen in der Regel aus einem einzigen Gurtband, das durch Umlenkungen zu einen quer über den Oberkörner des Fahrzeuginsassen verlaufenden Schultergurtabschnitt und einem Beckengurtabschnitt ausgebildet ist. Dabei ist der Schultergurtabschnitt an seinem oberen Ende üblicherweise durch einen am Fahrzeugaufbau befestigten Umlenkbeschlag hindurchgeführt und verläuft von dort nach unten zu einem Gurtaufrollautomaten.

Um den unterschiedlichen Körpergrößen der einzelnen Fahrzeuginsassen gerecht zu werden, wird der Umlenkbeschlag schwenkbar gegenüber dem Fahrzeugaufbau ausgeführt. Durch eine ungehinderte Verschwenk- bzw. Verdrehbarkeit des Umlenkbeschlages ergibt sich aber ein Nachteil. Im Belastungsfall wird das Gurtband in einen Eckabschnitt des Durchführungsschlitzes gezwangt und neigt dadurch zum Reißen.

Man ist daher bemüht, die Verschwenkbarkeit des Umlenkbeschlages zu begrenzen. Andererseits aber ist eine unbegrenzte Verschwenkbarkeit bei besonderen Belastungsfällen wünschenswert.

Aufgabe der Erfindung ist es, einen gattungsgemäßen Umlenkbeschlag so auszugestalten, daß er sowohl ein Verlagern des Gurtbandes in einen Eckabschnitt des Führungsschlitzes des Umlenkbeschlages verhindert, andererseits beim Auftreten besonderer Belastungen ungehindert verschwenken kann.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung gewährt die Sollbruchverbindung dem Umlenkbeschlag eine gewisse Verschwenkbarkeit. Damit paßt sich der Gurtbandverlauf der jeweiligen Größe des Fahrzeuginsassens an. Treten die zuvor erwähnten Belastungen auf, bricht die Verbindung und der Umlenkbeschlag kann frei verschwenken.

Die Sollbruchverbindung läßt sich am einfachsten über einen Abscherzapfen verwirklichen, der am Umlenkbeschlag vorgesehen ist. Der Abschnitt des Zapfens greift zweckmäßigerweise in eine Aufnahmeöffnung des aufbauseitigen Befestigungsabschnittes ein. Im bevorzugten Fall ist diese Aufnahmeöffnung als kreisbogenförmiges Langloch ausgebildet.

Die Erfindung gestattet in einer vorteilhaften Ausführung auf einen bereits vorhandenen Umlenkbeschlag zurückzugreifen. Hierzu wird auf den Umlenkbeschlag ein schalenartiges Aufnahmeteil aufgesetzt und mit ihm verschraubt. An dem Aufnahmeteil ist einstückig der Abscherzapfen ausgebildet. Desweiteren ist es zweckmäßig, das Aufnahmeteil aus Kunststoff herzustellen.

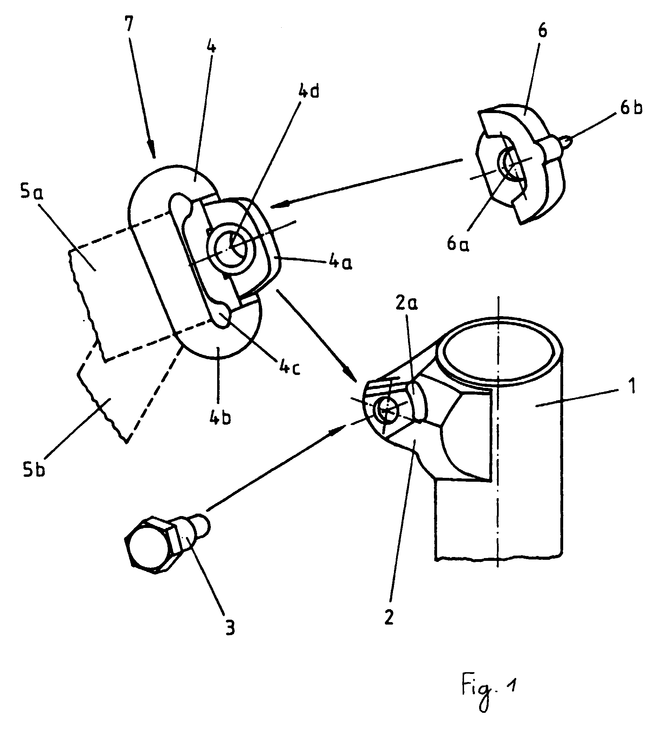

Weitere Vorteile der Erfindung ergeben sich aus der nachfolgenden Beschreibung eines Ausführungsbeispiels und anhand der Zeichnung, auf die die Beschreibung Bezug nimmt.

Die Zeichnung zeigt in einer einzigen Figur und in auseinander gezogener Darstellung den Anbringungsort eines Umlenkbeschlages 4 eines üblichen Dreipunktsicherheitsgurtsystems in einem Kraftfahrzeug. Der Umlenkbeschlag 4 ist dabei in Höhe der Schulter eines nicht dargestellten Fahrzeuginsassens am Fahrzeugaufbau angeordnet. Die Zeichnung zeigt symbolisch für den Fahrzeugaufbau ein Rohr 1. Es sei aber darauf hingewiesen, daß auch beispielsweise die Rückenlehne eines Fahrzeugsitzes im Sinne der vorliegenden Erfindung als Zum Fahrzeugaufbau gehörend angesehen werden kann.

An dem Rohr 1 ist ein Befestigungsauge 2 ausgeformt, an dem sich mittels einer Befestigungsschraube 3 der Umlenkbeschlag 4 eines mit 5a und 5b angedeuteten Sicherheitsgurtes festschrauben läßt. Der Umlenkbeschlag 4 besteht aus einem Befestigungsabschnitt 4a mit einem Durchgangsloch 4d für die Befestigungsschraube 3. An dem Befestigungsabschnitt 4a schließt sich ein Abschnitt 4b mit einem Führungsschlitz 4c an, durch den das Gurtband hindurchgeführt ist. Der Gurtbandabschnitt 5a bildet dabei einen in der Zeichnung nicht erkennbaren Schultergurtabschnitt, der quer über den Oberkörper des Fahrzeuginsassen verläuft, während der Gurtabschnitt 5b nach unten zu einem in der Nähe des Fahrzeugbodens angebrachten Aufrollautomaten führt.

Vor dem Verschrauben wird auf den Befestigungsabschnitt 4a des Umlenkbeschlages 4 ein Aufnahmeteil 6 aufgesteckt, das eine mit dem Durchgangsloch 4d des Umlenkbeschlages 4 fluchtende Schraubenbohrung 6a aufweist. Außerdem weist das Aufnahmeteil 6 an seiner dem Befestigungsauge 2 zugewandten Seite ein Abscherzapfen 6b auf.

Die so komplettierten Teile werden am Befestigungsauge 2 festgeschraubt, jedoch so, daß sich der Umlenkbeschlag 4 mit seinem Aufnahmeteil 6 nach wie vor um die Schraubenachse frei drehen läßt. Beim Verschrauben greift jedoch der Abscherzapfen 6b in eine als kreisbogenförmiges Langloch ausgebildete Aufnahmeöffnung 2a ein. Die Aufnahmeöffnung 2a ist gegenüber der Befestigungsschraube mit Abstand angeordnet, wobei der Kreismittelpunkt mit der Schraubenachse zusammenfällt. Die Abmessungen des Abscherzapfens 6b und der Aufnahmeöffnung 2a sind so gewählt, daß sich der Abscherzapfen 6b darin frei bewegen kann. Die Drehbewegung wird andererseits durch die Länge der kreisbogenförmigen Aufnahmeöffnung begrenzt.

Auf diese Weise ist sichergestellt, daß bei einem normalen Belastungsfall, also wenn auf das Gurtband 5a durch Vorverlagerung des Fahrzeuginsassen Kräfte wirken, das Gurtband nicht in einen Eckabschnitt des Führungsschlitzes 4c abrutscht. Erfährt andererseits der Umlenkbeschlag 4 eine Krafteinwirkung, wie sie beispielsweise durch den Pfeil 7 dargestellt ist, bricht der Zapfen 6b und der Umlenkbeschlag 4 kann frei nach unten wegdrehen.

## Patentansprüche

1. Umlenkbeschlag für einen Sicherheitsgurt in einem Fahrzeug, insbesondere Kraftfahrzeug, durch den das Gurtband in einem Führungsschlitz hindurchgeführt und der schwenkbar an einem aufbaufesten Abschnitt des Fahrzeugs in etwa in Höhe der Schulter des Fahrzeuginsassen angeordnet ist, dadurch gekennzeichnet, daß der Umlenkbeschlag (4) über eine Sollbruchverbindung (Zapfen 6b) in einer vorbestimmten, eine begrenzte Schwenkbewegung erlaubenden Lage gehalten ist.

2. Umlenkbeschlag nach Anspruch 1, dadurch gekennzeichnet, daß der Umlenkbeschlag (4) mit einer Befestigungsschraube (3) am Fahrzeugaufbau (Befestigungsabschnitt 2) festgelegt ist und sich frei um die Schraubenachse drehen kann und daß er einen gegenüber der Befestigungsschraube (3) beabstandeten, die Sollbruchverbindung bildenden Abscherzapfen (6b) aufweist, der in eine die Drehbewegung des Umlenkbeschlages (4) begrenzenden Aufnahmeöffnung (2a) des aufbauseitigen Befestigungsabschnittes (2) greift.

3. Umlenkbeschlag nach Anspruch 2, dadurch gekennzeichnet, daß der Umlenkbeschlag (4) zumindest im Bereich seines Befestigungsabschnittes (4a) in ein getrenntes schalenartiges Aufnahmeteil (6) aufgesteckt ist, das mit der Befestigungsschraube (3) des Umlenkbeschlages (4) in seiner Lage gesichert und an dem der Abscherzapfen (6b) ausgebildet ist.

4. Umlenkbeschlag nach Anspruch 3, dadurch gekennzeichnet, daß das Aufnahmeteil (6) mit seinem integriertem Abscherzapfen (6b) als Kunststoffteil ausgeführt ist.

5. Umlenkbeschlag nach einem der Ansprüche 2 bis 4, dadurch gekennzeichnet, daß der Abscherzapfen (6b) in eine gegenüber der als Schwenkachse für den Umlenkbeschlag (4) dienende Schraubenachse der Befestigungsschraube (3) in Abstand angeordnete kreisbogenförmige Aufnahmeöffnung (2a) eingreift.

## Claims

1. A guide fitting for a safety belt in a vehicle, especially a motor vehicle, through which the belt strap extends in a guide slot and which is disposed at about the level of a vehicle occupant's shoulder so as to be pivotable on a portion of the vehicle fastened to the body, characterised in that the guide fitting (4) is held by a preset breaking connection (pin 6b) in a predetermined position permitting limited pivoting motion.

2. A guide fitting according to claim 1, characterised in that the guide fitting (4) is secured to the vehicle body (fastening portion 2) by a screw (3) and can rotate freely around the screw axis and comprises a shearing pin (6b) forming the preset breaking connection and spaced apart from the fastening screw (3), the pin engaging in a receiving opening (2a) in the fastening portion (2) on the vehicle body, which limits the rotary motion of the guide fitting (4).

3. A guide fitting according to claim 2, characterised in that the guide fitting (4), at least in the neighbourhood of its fastening portion (4a), is mounted in a separate shell-like receiving part (6) which is secured in position by the screw (3) fastening the guide fitting (4), the shearing pin (6b) being formed on the receiving part (6).

4. A guide fitting according to claim 3, characterised in that the receiving part (6) and the shearing pin (6b) incorporated therein are made of plastics material.

5. A guide fitting to any of claims 2 to 4, characterised in that the shearing pin (6b) engages in an arcuate receiving opening (2a) spaced apart from the axis of the fastening screw (3), which serves as the axis of rotation for the guide fitting (4).

## Revendications

1. Ferrure de renvoi pour une ceinture de sécurité dans un véhicule, en particulier un véhicule automobile, au moyen de laquelle la bande de ceinture est passée dans une fente de guidage, et qui est disposée pivotante sur un tronçon fixe par rapport à la carrosserie du véhicule, à peu près à hauteur de l'épaule des passagers du véhicule,
caractérisée en ce que
la ferrure de renvoi (4) est maintenue dans une position prédéterminée, permettant un mouvement de pivotement limité, au moyen d'une liaison destinée à la rupture (tourillon 6b).

2. Ferrure de renvoi selon la revendication 1,
caractérisée en ce que
la ferrure de renvoi (4) est fixée sur la carrosserie du véhicule (tronçon de fixation 2) à l'aide d'une vis de fixation (3) et peut tourner librement autour de l'axe de la vis, et en ce qu'elle présente un tourillon destiné au cisaillement (6b), constituant la liaison destinée à la rupture, espacé de la vis de fixation (3) qui s'engage dans une ouverture de logement (2a), délimitant le mouvement de rotation de la ferrure de renvoi (4), appartenant au tronçon de fixation (2) situé du côté de la carrosserie.

3. Ferrure de renvoi selon la revendication 2,
caractérisée en ce que
la ferrure de renvoi (4) est enfichée, au moins dans une zone de son tronçon de fixation (4a), dans une partie de logement (6) du genre d'une coque, séparée, qui est assurée à sa position à l'aide de la vis de fixation (3) de la ferrure de renvoi (4) et sur laquelle est constituée le tourillon destiné au cisaillement (6b).

4. Ferrure de renvoi selon la revendication 3,
caractérisée en ce que
la partie de logement (6) avec son tourillon destiné au ci-saillement (6b) intégré est réalisée sous la forme d'une pièce en matière plastique.

5. Ferrure de renvoi selon l'une des revendications 2 à 4, caractérisée en ce que
le tourillon destiné au cisaillement (6b) s'engage dans une ouverture de logement (2a) en forme d'arc de cercle, disposée à distance de l'axe de vis, servant d'axe de pivotement de la ferrure de renvoi (4) de la vis de fixation (3).
